# EUROPÄISCHE PATENTSCHRIFT

(11) **EP 1 288 035 B1**
(45) Veröffentlichungstag und Bekanntmachung des Hinweises auf die Patenterteilung: **03.11.2004**
(21) Anmeldenummer: 02018431.3
(22) Anmeldetag: 16.08.2002
(51) Int. Cl.: B60H 3/06, B60H 1/00

(54) **Luftfiltersystem für Fahrzeugkabinen**
Air filter system for vehicle cabin
Système de filtre à air pour cabine de véhicule

(30) Priorität: 28.08.2001 DE 10141986
(43) Veröffentlichungstag der Anmeldung: 05.03.2003
(73) Patentinhaber: DEERE & COMPANY, Moline, Illinois 61265-8098 (US)
(72) Erfinder: Rückert, Dieter, 68799 Reilingen (DE); Philipp, Marc, 70197 Stuttgart (DE); Wagner, Ewald, 74321 Bietigheim-Bissingen (DE)
(74) Vertreter: Lau-Loskill, Philipp, Dipl.-Phys.

(56) Entgegenhaltungen:
- EP-A- 0 169 040
- EP-A- 0 513 491
- EP-A- 0 733 503
- DE-A- 19 628 089
- US-A- 5 921 619

## Beschreibung

Die Erfindung betrifft ein Luftfiltersystem für Fahrzeugkabinen, beispielsweise für Kabinen von Nutzfahrzeugen, insbesondere von Ackerschleppern und Erntemaschinen. Das Luftfiltersystem enthält einen Umluftkreis, bei dem wenigstens ein Umluftgebläse in einem Umluftkanalsystem angeordnet ist. Das Umluftgebläse saugt Luft aus dem Kabineninnenraum an und bläst diese wieder zurück in den Kabineninnenraum. Im Umluftstrom ist wenigstens ein Umluftfilter angeordnet, der Verunreinigung aus der Umluft filtert.

Luftfiltersysteme für Fahrzeuge weisen häufig neben einer Frischluftzufuhr einen Umluftkreis auf, welcher die Kabinenluft umwälzt, reinigt, aufheizt und/oder klimatisiert. Der Umluftkreis kann mehr oder weniger separat zu der Frischluftzufuhr ausgebildet sein und enthält häufig, insbesondere bei Nutzfahrzeugen, wie Ackerschleppern oder Erntemaschinen, gesonderte Umluftfilter. Dokument EP 0 513 491 offenbart zum Beispiel ein Belüftungssystem mit Erischluft- und Umluftkreise.

Insbesondere bei Maschinen im landwirtschaftlichen Einsatz führt die Frischluft eine erhebliche Schmutzfracht aus Staub und Ernterückständen mit sich, so dass die Frischluftfilter einer erheblichen Verschmutzung ausgesetzt sind und häufig gereinigt oder ausgewechselt werden müssen. Es wurde daher vorgeschlagen (EP-A-0 438 076), die Frischluftfilter so anzuordnen, dass sie vom Kabinenäußeren aus zugänglich sind und eine Verschmutzung des Kabineninnenraums beim Filterwechsel vermieden werden kann. Es ist auch bekannt, von außen zugängliche Frischluftfilter im Dachbereich des Fahrzeugs anzuordnen. Beispielsweise beschreibt die US-A-4,648,311 einen Frischluftfilter, dass im seitlichen Überstand des Fahrzeugdachs auf einem Tragelement angeordnet ist, welches sich zum Filterwechsel um eine Achse nach unten schwenken lässt.

Dagegen sind die Umluftfilter im allgemeinen keinem hohen Schmutzanfall ausgesetzt, sondern filtern im wesentlichen die in die Kabine eingedrungenen Abgase sowie den vom Fahrer stammenden Zigarettenrauch aus der Umluft heraus. Daher sind die Wartungs- und Austauschintervalle für Umluftfilter relativ lang. Umluftfilter werden innerhalb der Kabine in den entsprechenden Strömungskanälen angeordnet und sind nach Entfernen von Verkleidungsteilen, Deckeln und dergleichen vom Kabineninnenraum aus zugänglich und lassen sich warten und austauschen (US-A-4, 344, 356). Wegen der geringen Verschmutzung tritt bei der Wartung und beim Filterwechsel keine nennenswerte Verschmutzung des Kabineninnenraums auf.

Es hat sich jedoch gezeigt, dass trotz des geringen Schmutzanfalls ein Umluftfilterwechsel innerhalb der Kabine problematisch sein kann. Insbesondere wenn das Fahrzeug in einer toxischen Umgebung eingesetzt wird, wie beispielsweise beim Spritzen mit toxischen Spritzmedien, können toxische Partikel in die Kabine Eindringen, beispielsweise indem sie die Bedienungsperson mit der Kleidung oder den Schuhen einschleppt. Die toxischen Partikel werden durch das Umluftfilter aus der Kabinenumluft herausgefiltert und sammeln sich im Umluftfilter an. Beim Filterwechsel können diese Partikel dann in das Kabineninnere gelangen.

Die der Erfindung zugrunde liegende Aufgabe wird darin gesehen, ein Luftfiltersystem der eingangs genannten Art derart auszubilden, dass die eingangs genannten Probleme überwunden werden. Insbesondere soll das Luftfiltersystem derart ausgebildet werden, dass die Gefahr von Kontaminationen des Kabineninnenraums beim Filterwechsel zuverlässig vermieden wird.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.
Die Belüftungseinrichtung bzw. das Luftfiltersystem enthält einen Umluftkreis, bei dem wenigstens ein Umluftgebläse in einem Umluftführungskanalsystem angeordnet ist und Luft aus dem Kabineninnenraum ansaugt und wieder in den Kabineninnenraum bläst. Im durch das Umluftkanalsystem geführten Luftstrom ist wenigstens ein Umluftfilter angeordnet. Erfindungsgemäß ist das Umluftfilter im Bereich einer Außenwandung des Kabinendaches hinter einer Abdeckung, die wenigstens ein Abdeckelement enthält, angeordnet. Die Abdeckung verschließt den Bereich des Umluftkanalsystems, in welchem sich das Umluftfilter befindet, hermetisch gegenüber dem Kabinenäußeren. Das Abdeckelement lässt sich von der Außenwand der Kabine entfernen bzw. öffnen, so dass das Umluftfilter von außen zugänglich ist.

Das erfindungsgemäße Luftfiltersystem ermöglich eine Handhabung eines kontaminierten Umluftfilters bei der Filterwartung oder beim Filterwechsel von außen. Damit kann eine Kontamination des Kabineninneren mit toxischen Spritzmedien (Pestiziden) und dergleichen zuverlässig vermieden werden. Ein mit einem erfindungsgemäß ausgebildeten Luftfiltersystem ausgerüstetes Arbeitsfahrzeug bietet damit einen absoluten Schutz beim Spritzen mit toxischen Spritzmedien. Des Weiteren ist durch das erfindungsgemäße Luftfiltersystem eine sehr gute Zugänglichkeit zum Umluftfilter für den Filterservice und -austausch gegeben.

Da der Umluftführungskanal durch die Abdeckung luftdicht nach außen abgeschlossen ist, kann keine Frischluft über das Umluftsystem in die Kabine eindringen.

Vorzugsweise verschließt das Abdeckelement eine Öffnung im Bereich eines Überstandes, insbesondere eines seitlichen Überstandes des Kabinendachs. Hinter der Öffnung ist das Umluftfilter angeordnet und von außen zugänglich, wenn das Abdeckelement von der Kabinenaußenwand entfernt wird.

Eine gute Zugänglichkeit ist gegeben, wenn das Abdeckelement eine Öffnung auf der Unterseite des seitlichen Überstandes verschließt. Für Servicearbeiten oder einen Filteraustausch lässt sich dann das Abdeckelement von unten aus bequem entfernen, so dass ein guter Zugang zum Umluftfilter gegeben ist.

Vorzugsweise ist das Umluftfilter durch einen Deckel abgedeckt. Der Deckel enthält wenigstens eine Öffnung, über die eine Seite des Umluftfilters, beispielsweise die Lufteintrittseite des Umluftfilters, mit dem Umluftführungskanal in Verbindung steht. Der Deckel bildet somit einen Teilabschnitt des Luftführungskanals, der die Umluft führt. Ein Frischlufteintritt von außen ist hierbei nicht möglich.

Eine besonders bevorzugte Weiterbildung der Erfindung sieht vor, sowohl wenigstens ein Umluftfilter als auch wenigstens ein Frischluftfilter nebeneinander im Kabinendach, insbesondere in einem Überstand des Kabinendachs unterzubringen. Dabei ist der Umluftkanalabschnitt, in dem das Umluftfilter angeordnet ist, durch wenigstens ein Abdeckelement gegenüber der Umgebung verschlossen, während ein Frischluftkanal, in dem das Frischluftfilter und ein Frischluftgebläse angeordnet sind, mit einem Frischlufteintritt in Verbindung steht, über welchen Frischluft vom Kabinenäußeren angesaugt wird. Der Frischlufteintritt kann als ein mit Lufteintrittsschlitzen versehenes gesondertes Abdeckelement ausgebildet sein. Diese Ausbildung erleichtert die Servicearbeiten und die Filterwechsel, welche im Bedarfsfall für beide Filtertypen gemeinsam erfolgen können.

Hierbei ist es von Vorteil, wenn das Umluftfilter und das Frischluftfilter in einem seitlichen Überstand des Kabinendaches in Fahrtrichtung hintereinander angeordnet sind.

Der Zugang zu beiden Filtertypen wird des Weiteren dadurch erleichtert, dass lediglich ein an die äußere Kontur der Kabinenaußenwandung angepasstes Verkleidungsteil vorgesehen ist, welches die Filteranordnungen mit Umluftfiltereinsatz und Frischluftfiltereinsatz abdeckt.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Schnittbild des Dachbereichs einer Fahrzeugkabine mit einem erfindungsgemäßen Umluftkreis,
- Fig. 2: ein weiteres Schnittbild des Dachbereichs einer Fahrzeugkabine mit einer Frischluftzufuhr und
- Fig. 3: die perspektivische Explosionsdarstellung einer erfindungsgemäßen Belüftungseinrichtung.

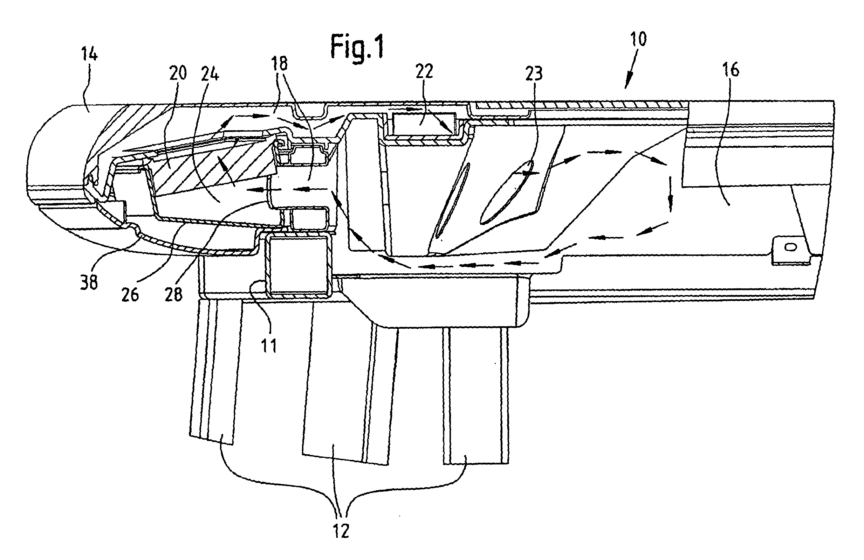

Aus Fig. 1 geht ein Bereich des Daches 10 einer Fahrzeugkabine hervor. Es handelt sich im wesentlichen um einen Schnitt durch das Kabinendach 10, der quer zur Fahrtrichtung des Fahrzeugs verläuft. Das Dach 10 enthält eine aus Dachholmen 11 gebildete Tragstruktur, die von Eck- und Seitenpfosten 12 der Kabine getragen wird. Das Dach 10 steht seitlich über die durch die Eck- und Seitenpfosten 12 definierte Kabinenkontur hervor und bildet so einen seitlichen Dachüberstand 14, der auch mit Dachüberhang bezeichnet wird.

Im in Fig. 1 dargestellten Dachbereich ist der Umluftkreis eines Luftfiltersystems angeordnet. Die Luftzirkulation im Umluftkreis ist durch Pfeile angedeutet. Die Luft tritt aus dem Kabineninnenraum 16 in einen Umluftführungskanal 18 ein und durchströmt einen Umluftfilter 20. Die Luftströmung wird durch ein Umluftgebläse 22 aufrechterhalten, welches die Umluft durch eine oder mehrere Eintrittsöffnung(en) 23 zurück in den Kabineninnenraum 16 fördert. Auf der Eintrittseite 24 des Umluftfilters 20 ist der Umluftführungskanal als abnehmbarer Deckel 26 ausgebildet. Der Deckel 26 weist eine Lufteintrittsöffnung 28 auf, durch die Luft aus dem Kabineninnenraum 16 zum Umluftfilter 20 strömen kann. Der Deckel 26 bildet eine Abdeckung für das Umluftfilter 20 und dichtet im montierten Zustand mittels einer umlaufenden Dichtung 30 den Umluftführungskanal 18 hermetisch ab, so dass keine Frischluft vom Kabinenäußeren in den Umluftkreis eintreten kann. Bei abgenommenen Deckel 26 ist das Umluftfilter 20, das in einer Kassette angeordnet und als Filtereinsatz ausgebildet sein kann, von außen zugänglich und lässt sich aus dem Dachbereich entfernen, warten und/oder austauschen.

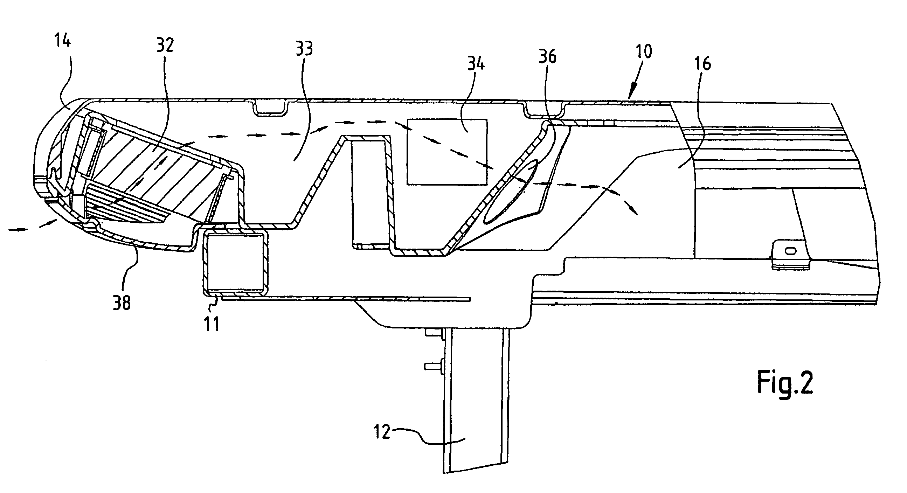

Aus Fig. 2 geht ein Schnitt durch das Kabinendach 10 hervor, der gegenüber dem Schnitt der Fig. 1 parallel versetzt ist und ebenfalls im wesentlichen quer zur Fahrtrichtung des Fahrzeugs verläuft.

In Fig. 2 ist eine Frischluftzufuhr dargestellt, deren Luftführung durch Pfeile angedeutet wurde. Die Frischluft tritt durch Lufteintrittsschlitze, die an der Unterseite des Dachüberstandes 14 ausgebildet sind, in den Dachbereich ein, durchströmt ein Frischluftfilter 32 und einen Frischluftkanal 33 und wird mittels eines Frischluftgebläses 34 durch Eintrittsöffnungen 36 in den Kabineninnenraum 16 geblasen. Die Frischluftzufuhr in den Kabineninnenraum 16 lässt sich auf übliche Weise durch geeignete Mittel, beispielsweise durch von Hand betätigbare Klappen, unterbinden, was jedoch nicht näher dargestellt wurde. Auch das Frischluftfilter 32 kann kassettenförmig ausgebildet sein und ist für Wartungs- oder Auswechselarbeiten von außen zugänglich und herausnehmbar.

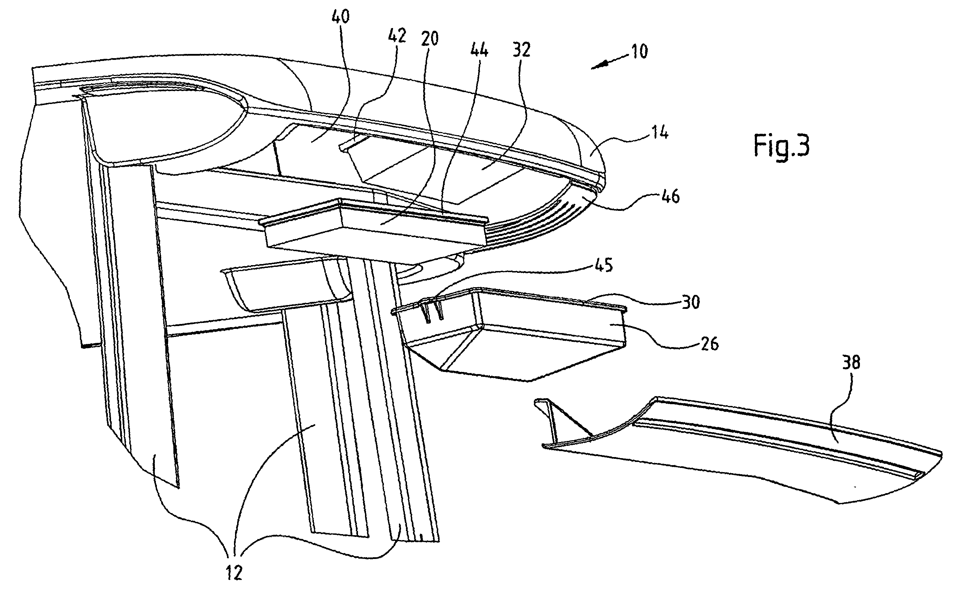

Aus Fig. 3 geht ein Teil der Fahrzeugkabine mit einem Dachüberstand 14 hervor, in dessen unteren Bereich eine durch ein Verkleidungsteil 38 verschließbare Aushöhlung 40 ausgebildet ist. In der Aushöhlung 40 befindet sich ein Frischluftfilter 32, das unter Verwendung einer umlaufenden Dichtung 42 luftdicht an den Frischluftkanal 33 angeschlossen ist und sich zu Wartungszwecken und zum Filteraustausch herausnehmen lässt. Seitlich neben dem Frischluftfilter 32 ist ein Umluftfilter 20 in abgenommenem Zustand dargestellt, welches durch eine umlaufende Dichtung 44 luftdicht in den Umluftkanal 18 einsetzbar ist. Des Weiteren ist in Fig. 3 der abgenommene Deckel 30 dargestellt, der im montierten Zustand das Umluftfilter 20 abdeckt und den Umluftkanal 18 hermetisch gegen Frischlufteintritt abdichtet. Der Deckel 26 enthält Befestigungsmittel 45 zur Befestigung am Umluftkanal 18.

Wenn die beiden Filter 20, 32 und der Deckel 26 im Dachüberstand 14 montiert sind, lässt sich die Aushöhlung 40 durch das Verkleidungsteil 38, das an die äußere Kontur der Kabine angepasst ist, verschließen. Der Frischlufteintritt erfolgt über Lufteintrittsschlitze, die in einer gesonderten abnehmbaren Abdeckung 46 ausgebildet sind.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Luftfiltersystem für Fahrzeugkabinen mit einem Umluftkreis, bei dem wenigstens ein Umluftgebläse (22) in einem Umluftkanalsystem (18) angeordnet ist und Luft aus dem Kabineninnenraum (16) ansaugt und wieder in den Kabineninnenraum (16) bläst, und bei dem wenigstens ein Umluftfilter (20) im Luftstrom angeordnet ist, wobei das Umluftfilter (20) im Bereich einer Außenwandung des Kabinendaches hinter wenigstens einem Abdeckelement (26) angeordnet ist und wobei das Umluftfilter (20) bei geöffnetem Abdeckelement (26) von außen zugänglich ist, **dadurch gekennzeichnet, dass** das Abdeckelement (26) das Umluftkanalsystem (18) gegenüber dem Kabinenäußeren hermetisch verschließt.

2. Luftfiltersystem nach Anspruch 1, **dadurch gekennzeichnet, dass** sich das Abdeckelement (26) und gegebenenfalls das Umluftfilter (20) im Bereich eines Überstandes (14), insbesondere eines seitlichen Überstandes, des Kabinendaches befindet.

3. Luftfiltersystem nach Anspruch 2, **dadurch gekennzeichnet, dass** eine Öffnung (40) auf der Unterseite des seitlichen Überstandes (14) durch ein Abdeckelement (38) verschließbar ist.

4. Luftfiltersystem nach einem der vorhergehenden Ansprüche, **dadurch gekennzeichnet, dass** das Umluftfilter (20) durch ein Abdeckelement (26) abgedeckt ist, das wenigstens eine Öffnung (28) enthält, über die eine Seite (24) des Umluftfilters (20) mit dem Umluftführungskanal (18) in Verbindung steht.

5. Luftfiltersystem nach einem der vorhergehenden Ansprüche, **dadurch gekennzeichnet, dass** im Kabinendach, insbesondere in einem Überstand (14) des Kabinendaches, wenigstens ein Umluftfilter (20) und ein Frischluftfilter (32) nebeneinander angeordnet sind, wobei der Umluftkanalabschnitt (18), in dem das Umluftfilter (20) angeordnet ist, durch wenigstens ein Abdeckelement (26) zum Kabinenäußeren verschlossen ist, während ein Frischluftkanal, in dem das Frischluftfilter (32) und ein Frischluftgebläse (34) angeordnet sind, mit einem Frischlufteintritt in Verbindung steht, über den Frischluft vom Kabinenäußeren angesaugt wird.

6. Luftfiltersystem nach Anspruch 5, **dadurch gekennzeichnet, dass** das Umluftfilter (20) und das Frischluftfilter (32) in einem seitlichen Überstand (14) des Kabinendaches in Fahrtrichtung hintereinander angeordnet sind.

7. Luftfiltersystem nach einem der Ansprüche 1 bis 6, **dadurch gekennzeichnet, dass** ein Verkleidungsteil (38) für die Kabinenaußenwandung vorgesehen ist, dass die Filteranordnungen abdeckt.

## Claims

1. An air filter system for vehicle cabs with an air recirculating circuit, in which at least one air recirculating blower (22) is arranged in an air recirculating channel system (18) and air is sucked out of the cab interior (16) and blown into the cab interior (16) again and in which at least one air recirculating filter (20) is disposed in the air stream, wherein the air recirculating filter (20) is arranged in the region of an outer wall of the cab roof, behind at least one cover element (26) and wherein the air recirculating filter (20) is accessible from the exterior with the cover element (26) opened, **characterized in that** the cover element (26) hermetically closes the air recirculating channel system (18) relative to the cab exterior.

2. An air filter system according to claim 1, **characterized in that** the cover element (26) and optionally the air recirculating filter (20) are located in the region of a projection (14), especially a side projection of the cab roof.

3. An air filter system according to claim 2, **characterized in that** an opening (40) on the underside of the side projection (18) can be closed by a cover element (38).

4. An air filter system according to any of the preceding claims, **characterized in that** the air recirculating filter (20) is covered by a cover element (26) which has at least one opening (28), via which one side of the air recirculating filter (20) is in communication with the air recirculating guide channel (18).

5. An air filter system according to any of the preceding claims, **characterized in that** at least one air recirculating filter (20) and a fresh air filter (32) are arranged alongside one another in the cab roof, especially in a projection (14) of the cab roof, wherein the air recirculating channel section (18) in which the air recirculating filter (20) is arranged is closed to the cab exterior by at least one cover element (26), while a fresh air channel in which the fresh air filter (32) and a fresh air blower (34) are arranged is in communication with a fresh air inlet, via which fresh air is sucked in from the cab exterior.

6. An air filter system according to claim 5, **characterized in that** the air recirculating filter (20) and the fresh air filter (32) are arranged in a side projection (14) of the cab roof, one following the other in the direction of travel.

7. An air filter system according to any of claims 1 to 6, **characterized in that** a cladding part (38) for the cab exterior wall is provided and covers the filter arrangements.

## Revendications

1. Système de filtre à air pour cabine de véhicule comportant un circuit de circulation d'air dans lequel au moins une soufflerie (22) d'air recyclé est montée dans un système à canal de circulation d'air (18) aspirant l'air depuis l'espace intérieur de la cabine (16) et le resoufflant dans l'espace intérieur de la cabine (16), et dans lequel est disposé dans le courant d'air au moins un filtre (20) pour l'air en circulation, le filtre (20) pour l'air en circulation étant disposé dans la région d'une paroi extérieure du toit de la cabine, derrière au moins un élément de protection (26) et le filtre (20) pour l'air en circulation étant accessible depuis l'extérieur par l'élément de protection (26) à l'état ouvert, **caractérisé en ce que** l'élément de protection (26) obture hermétiquement le système à canal de circulation d'air (18) contre l'extérieur de la cabine.

2. Système de filtre à air selon la revendication 1, **caractérisé en ce que** l'élément de protection (26), et éventuellement le filtre à air (20) se trouvent dans la région d'une avancée (14), en particulier d'une avancée latérale du toit de la cabine.

3. Système de filtre à air selon la revendication 2, **caractérisé en ce qu'**une ouverture (40) pratiquée sur la face inférieure de l'avancée latérale (14) peut être obturée par un élément de protection (38).

4. Système de filtre à air selon l'une des revendications précédentes, **caractérisé en ce que** le filtre à air (20) est recouvert par un élément de protection (26) qui comporte au moins une ouverture (28), par laquelle un côté (24) du filtre à air (20) est mis en communication avec le canal de guidage de l'air en circulation (18).

5. Système de filtre à air selon l'une des revendications précédentes, **caractérisé en ce que**, dans le toit de la cabine, plus particulièrement dans une avancée (14) du toit de la cabine, au moins un filtre à air (20) et un filtre à air frais (32) sont disposés côté à côte, la section de canal d'air en circulation (18) étant située dans le filtre à air (20), et étant isolée de l'extérieur de la cabine par au moins l'élément de protection (26), tandis qu'un canal d'air frais, comportant le filtre à air frais (32) et une soufflerie d'air frais (34), communique avec une entrée d'air frais par laquelle l'air frais est aspiré depuis l'extérieur de la cabine.

6. Système de filtre à air selon la revendication 5, **caractérisé en ce que** le filtre à air (20) et le filtre à air frais (32) sont disposés dans une avancée latérale (14) du toit de la cabine, l'un derrière l'autre dans la direction d'avancée.

7. Système de filtre à air selon l'une des revendications 1 à 6, **caractérisé en ce qu'**un élément d'habillage (38) de la paroi extérieure de la cabine est prévu, et **en ce qu'**il recouvre les agencements de filtration.
